# EUROPÄISCHE PATENTSCHRIFT

(11) **EP 0 923 204 B1**
(45) Veröffentlichungstag und Bekanntmachung des Hinweises auf die Patenterteilung: **23.02.2005**
(21) Anmeldenummer: 98440283.4
(22) Anmeldetag: 04.12.1998
(51) Int. Cl.: H04B 10/158, H04L 25/06, H04L 1/20

(54) **Optischer Empfänger für den empfang von digital übertragenen Daten**
Optical receiver for receiving digital transmitted data
Récepteur optique pour récevoir des données numériques transmises

(30) Priorität: 11.12.1997 DE 19754993; 12.05.1998 DE 19821142
(43) Veröffentlichungstag der Anmeldung: 16.06.1999
(73) Patentinhaber: ALCATEL, 75008 Paris (FR); Alcatel SEL Aktiengesellschaft, 70435 Stuttgart (DE)
(72) Erfinder: Wedding, Berthold, Dr., 70825 Korntal-Münchingen (DE)
(74) Vertreter: Rausch, Gabriele, Dr.

(56) Entgegenhaltungen:
- EP-A- 0 405 679
- EP-A- 0 455 910
- US-A- 5 371 625
- SHERIF M.; DAVIES P.A.: 'Decision-point steering in optical fibre communication' IEE PROCEEDINGS J. OPTOELECTRONICS Bd. 136, Nr. 3, PART J, Juni 1989, Seiten 169 - 176, XP001153732

## Beschreibung

Die Erfindung geht aus von einem optischen Empfänger für den Empfang von digital übertragenen Daten nach der Gattung des Hauptanspruchs.

Bei der Übertragung von Digitalsignalen mit hoher Bitfolge-Frequenz (Giga-Bit-Bereich) treten verschiedene Dispersionseffekte auf, die durch Lichtwellenleiter des optischen Übertragungssystems hervorgerufen werden. Durch diese Dispersionseffekte werden die Datensignale verzerrt und damit die Übertragungslängen begrenzt. Zudem können Verzerrungen durch nichtlineare Effekte , z.B. den Kerr-Effekt auf der Glasfaser auftreten. Optische Empfänger, die in einem solchen Übertragungssystem eingesetzt werden, stehen vor der Aufgabe, auch verzerrte Signale auszuwerten und dabei nur geringe Bitfehler-Raten zuzulassen. Aus der Veröffentlichung "Decision-point steering in optical fibre communication system, M.Sherif, IEE Proceedings, Volume 136, Nr. 3, 1989, Seite 169ff ist bekannt, einen Empfänger in einem digitalen optischen Übertragungssystem zu optimieren, indem Entscheiderschwellen modifiziert werden und somit künstliche Fehler erzeugt werden. Dazu wird eine zweite Entscheiderschaltung parallel zum Hauptdatenstrom eingesetzt. Dieser zweite Signalzweig wird mit einer großen Zahl von Bitfehlern beaufschlagt. Die künstliche Fehlerrate wird in der vorliegenden Veröffentlichung durch Modifikation der Entscheiderschwelle erreicht, die über einen Rechteckpuls verändert wird. Die Ergebnisse der beiden Entscheider werden verglichen und aus dem Ergebnis Stellgrößen für einen Verstärker, sowie für die empfangenden Fotodioden abgeleitet. Betrachtet man das Augendiagramm des empfangenen Signals, so tastet der erste Entscheider die Augenöffnung an einer nahezu optimalen Stelle ab, d.h. sowohl Entscheiderschwelle als auch Abtastzeitpunkt liegen etwa in der Mitte des geöffneten Auges. Der zweite Signalpfad ändert die Entscheiderschwelle, so daß die Schwelle bereits im Rauschen des Augendiagramms liegen kann und so künstliche Fehler auftreten. Durch Auswertung dieser künstlichen Fehler wird der gesamte optische Empfänger nachgeregelt, um die Augenöffnung, das Rauschverhalten usw. zu optimieren.

Aus der EP 0554736 B1 ist ein digitales optisches Nachrichtenübertragungssystem bekannt, bei dem die Empfängerqualität durch Auswertung des Augendiagromms optimiert wird. Dabei wird im Empfänger ein Augendiagramm aufgenommen und in einem Rechner die Größe der Augenöffnung bestimmt. Der Rechner ermittelt aus den aufgenommenen Daten eine optimale Einstellung der Fotodiode, sowie der Entscheiderschwelle. Die Aufnahme eines Augendiagramms, der Vergleich mit einem gespeicherten Sollwert, sowie die Einstellung verschiedener Stellgrößen des Empfängers ermöglichen keine direkte Festellung der Bitfehler-Raten und eine daraus gewünschte Optimierung des Empfängers.

Der erfindungsgemäße optische Empfänger für den Empfang von digital übertragenen Daten mit den kennzeichnenden Merkmalen des Hauptanspruchs hat demgegenüber den Vorteil, daß Bitfehlerraten ermittelt werden können, wobei selbst einzelne Bitfehler detektiert werden. Vorteilhafterweise weist der optische Empfänger eine Pseudofehler-Monitor-Schaltung zur schwellenwert- und phasenlagenabhängigen Detektion von Bitfehlern auf, wobei diese Meßdaten zur Einstellung der Parameter eines Filters sowie der Entscheiderschaltung selbst dienen. Die mit dem Empfänger verbundene Recheneinheit stellt die Parameter aufgrund der gemessenen Bitfehlerdaten ein.

Durch die in den Unteransprüchen aufgeführten Maßnahmen sind vorteilhafte Weiterbildungen und Verbesserungen des im Hauptanspruch angegebenen optischen Empfängers möglich. Besonders vorteilhaft ist es, daß in der erfindungsgemößen Schaltung zwei unabhängige Fehlersignale ermittelt werden, wobei ein erstes Fehlersignal zur Ableitung von hohen Bitfehlerraten dient, während ein zweites Fehlersignal zur Detektion von einzelnen Bitfehlern herangezogen wird.

Vorteilhafterweise werden die Entscheiderschaltungen sowohl in ihrer Phasenlage als auch im Schwellenwert beeinflußt. Dabei erfolgt die Einstellung über Phasenschieber- und Phaseneinstellungsglieder auf einfache Weise über Signale der Recheneinheit. Um Fehler der Messung durch die unterschiedlichen Phosenlagen zu vermeiden, wird vorteilhafterweise die Phasenlage durch eine weitere Abtastung korrigiert. Dadurch werden die Signalzweige zu gleichen Zeiten abgetastet und die Ergebnisse vergleichbar.

Mit dem erfindungsgemäßen optischen Empfänger ist auf einfache Weise die Abtastung von Multilevelsignalen möglich, indem mehrere Entscheider parallel zueinander geschaltet werden, und ihr Ergebnis über einen Schalter, der von der Recheneinheit angesteuert wird, ausgelesen werden. Für das Auslesen von Multilevelsignalen ist es wichtig, daß auch die Phaseneinstellungen der unterschiedlichen Entscheider über einen Schalter auf die Entscheider geschaltet werden, so daß zum Auslesezeitpunkt jeweils eine eventuell vorhandene Phasenverschiebung vermieden wird. Die gewonnenen Daten dienen vorteilhafterweise zur Optimierung eines Filters, das zur Realisierung für hohe Datenraten aus einer Kette von Eingangsverstärkern und Ausgangsverstärkern aufgebaut ist. Dadurch ist es auf einfache Weise möglich auch bei hohen Datenraten eine Filterfunktion eines Transversalfilters zu realisieren. Die Multiplizierglieder des Filters werden dabei von der Recheneinheit angepaßt. Das erfindungsgemäße Filter des optischen Empfängers kann über die Ausgänge kaskadiert werden, so daß eine Folge von Filtern entsteht, mit denen noch höherer Ordnung realisiert werden können.

Besonders vorteilhaft ist es, daß die Verstärkungsfaktoren und die Gewichtungsfaktoren der Multiplizierschaltungen variable und einstellbar sind.
Daher ist eine Optimierung des Filters aufgrund von Daten, die im Empfänger ermittelt werden, möglich.

Durch den Strickleiteraufbau ist es auf einfache Weise möglich auch bei hohen Datenraten eine Filterfunktion eines Transversalfilters zu realisieren. Die Gewichtungsfaktoren der Multiplizierglieder des Filters werden dabei von einer Recheneinheit angepaßt. Das erfindungsgemäße Filter des optischen Empfängers kann über die Ausgänge kaskadiert werden, so daß eine Folge von Filtern entsteht, mit denen Filter noch höherer Ordnung realisiert werden können.

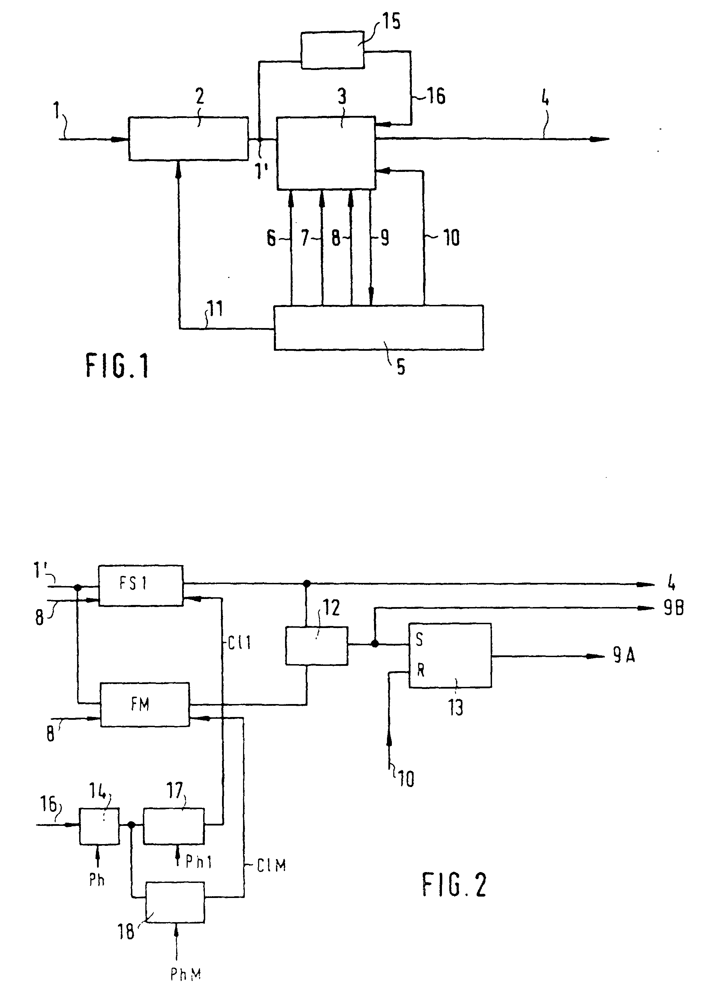

Ausführungsbeispiele der Erfindung sind in den Zeichnungen dargestellt und in der nachfolgendend Beschreibung näher erläutert.
Es zeigt Figur 1 den Aufbau eines optischen Empfängers,
Figur 2 eine Entscheiderschaltung mit Pseudofehler-Monitor des optischen Empfängers,
Figur 3 EXOR-Gatter mit Vorabtastung
Figur 4 Entscheiderschaltung für Multilevelsignale,
Figur 5 transversales Filter,
Figur 6 kaskadierte Filteranordnung und
Figur 7 beispielhafte Übertragungsfunktion eines DST-Signals.
Figur 81 den Aufbau eines Filters.

Figur 1 zeigt ein Eingangssignal 1, das zunächst ein Filter 2 und dann eine Entscheider/Pseudofehler-Monitor-Schaltung 3 durchläuft. Vom gefilterten Signal 1' zweigt die Taktableitung 15 ab, deren Taktsignal in die Entscheiderschaltung 3 eingeht. Mit der Entscheiderschaltung, sowie dem Filter 2 ist eine Recheneinheit 5 verbunden. Die Recheneinheit 5 liefert Signale, eine Leveleinstellung 6, Phaseneinstellungen PhM, Ph, Phl, Schwellenwerteinstellungen 8, ein Fehlerreset 10 an die Entscheiderschaltung, sowie ein Einstellungssignal 11 an das digitale Filter 2. Die Entscheiderschaltung 3 liefert die Fehlersignale 9 an die Recheneinheit 5.

Die eingehendenden Signale 1 werden zunächst im Filter 2 gefiltert und in der Entscheiderschaltung 3 abgetastet. Zur Abtastung muß zunächst der Takt 16 aus dem gefilterten Signal 1' zurückgewonnen werden. In der Entscheiderschaltung, die erfindungsgemäß eine Pseudofehler-Monitor-Schaltung enthält, wird das Eingangssignal 1' abgetastet und das Ausgangssignal 4 zur weiteren Bearbeitung ausgesendet. Die gesamte Steuerung des erfindungsgemäßen Empfängers erfolgt in der Recheneinheit 5, von der aus die Parameter 6, PhM, Ph,Phl, 8 und 10 für die Entscheider/Pseudofehler-Monitor-Schaltung 3 eingestellt werden. Die Recheneinheit 5 steuert ebenfalls die Koeffizienten des Filters 2 über die Filtereinstellungen 11. Die Ansteuerung von der Recheneinheit aus erfolgt über Digital- Analog-Wandler, die Auswertung des Fehlersignals 9 über einen Analog- Digital-Wandler. Die Regelung über die Recheneinheit erfolgt in einem langsamen Zeitrahmen. Das Regelsystem arbeitet dabei nicht mit den hohen eingehenden Datenraten. Daher ist der Einsatz konventioneller Recheneinheiten für das Regelsystem möglich. Der Einsatz einer Recheneinheit bietet zudem den Vorteil, daß durch Anpassung der Software die Anpassung der Einstellwerte sowohl in der Entscheiderschaltung 3 als auch im Filter 2 auf einfache Weise möglich ist.

Figur 2 zeigt eine erste Ausführungsform der erfindungsgemäßen Entscheider/Pseudofehler-Monitor-Schaltung 3. Das gefilterte Eingangssignal 1' ist mit dem Eingang eines Entscheiders FS1 und eines Entscheiders FM verbunden. Die Ausgänge der beiden Entscheider liegen jeweils am Eingang einer EXOR-Schaltung 12 an. Der Ausgang der EXOR-Schaltung 12 ist mit dem Eingang eines RS-Flipflop 13 und mit der Datenleitung 9B verbunden. Der R-Eingang des RS-Flipflop 13 ist mit dem Resetausgang 10 der Recheneinheit verbunden. Der Ausgang des Flipflop 13 ist an die Leitung 9A zur Recheneinheit angeschlossen. Zur Einstellung des Entscheiders FM ist er sowohl mit der Schwellenwerteinstellung 8 als auch über einen Phasenschieber 14 und einer Phaseneinstellung 1 7 verbunden. Der Entscheider FS1 weist ebenfalls eine Verbindung zur Schwellwerteinstellung 8, sowie eine Verbindung zu einer variablen Phaseneinstellung 18 auf, die nach dem Phasenschieber 14 abzweigt. Die variable Phaseneinstellungen 14,17,18 werden von Phaseneinstellungssignalen Ph, Phl, PhM angesteuert.

Das gefilterte Eingangssignal 1' gelangt parallel auf die Eingänge der beiden Entscheider FM und FS1. Dabei handelt es sich um zwei D-Flipflops. Beide Flipflops FM und FS1 kippen ausgangsseitig in den Zustand 1, wenn zum Zeitpunkt einer Taktflanke der Taktsignale CI1 und CIM das eingehende Signal 1' die Schwellenwerte 8 übersteigt. Die Ausgänge der Flipflops sind mit der EXOR-Schaltung 12 verbunden, die dann ein Signal liefert, wenn eingangsseitig unterschiedliche Signale anliegen. Die EXOR-Schaltung 12 liefert das Fehlersignal 9B, das bei hohen Fehlerraten durch die aufintegrierende Eigenschaft des Analog- Digital-Wandlers des Rechners zu einem Gleichspannungssignal führt. Ein hoher Gleichspannungspegel des Signals 9B detektiert somit eine hohe Bitfehlerrate. Das Ausgangssignal der EXOR-Schaltung 12 liegt am S-Eingang des RS-Flipflops 13 an. Das RS-Flipflop 13 kippt in den Zustand 1, wenn an seinem S-Eingang eine 1 anliegt. Über den R-Eingang kann das Flipflop 13 zurückgesetzt werden. Über dieses RS-Flipflop 13 ist eine Detektion von einzelnen Bitfehlern möglich. Das Flipflop speichert den Einzelfehler, bis der Rechner das Ausgangssignal 9A des Flipflops auswertet, und über den Eingang R zurücksetzt. Damit ist es einer Recheneinheit möglich, einzelne Bitfehler auszulesen und auszuwerten, obwohl die Recheneinheit selbst der schnellen Datenrate des optischen Übertragungssystems nicht folgen kann. Die in den Entscheiderschaltungen FM und FS1 abgetasteten Werte hängen stark von den Schwellenwerten 8, aber auch von der Phase der Abtastung ab. Der Entscheider FS1 wird zunächst mit einer festen Phaseneinstellung betrieben. Das aus dem Eingangssignal abgeleitete Taktsignal 16 wird einem Phasenschieber 14 eingegeben, der eine Phaseneinstellung 1 7 ansteuert. Diese Phaseneinstellung legt die Abtastphase CI1 des Entscheiders FS1 fest. Abzweigend nach dem Phasenschieber 14 wird ein variabler Phasenschieber 18 eingesetzt, um die Phasenlage des zweiten Entscheiders FM festzulegen. Die Phasenlage CIM des Entscheiders FM kann von 0 - 360° variabel eingestellt werden, wobei die Einstellung über das Phaseneinstellungssignal PhM, Ph, Phl der Recheneinheit erfolgt. Für die Ermittlung der Bitfehlerrate werden die Werte für den Entscheider FS1 nahezu optimal voreingestellt, d.h., daß der Abtastzeitpunkt und die Abtastschwelle ungefähr im Mittelpunkt der Augenöffnung des empfangenen Signals liegt. Durch Änderung der Abtastschwelle im Entscheider FM, sowie der Phasenlage CIM wird die Augenöffnung sowohl horizontal als auch vertikal abgetastet. Die dadurch ermittelten Bitfehlerraten dienen zur Optimierung der Augenöffnung als auch zur Optimierung von Entscheiderschwelle und Phase von FS1 und damit der Empfangseigenschaften des optischen Empfängers.

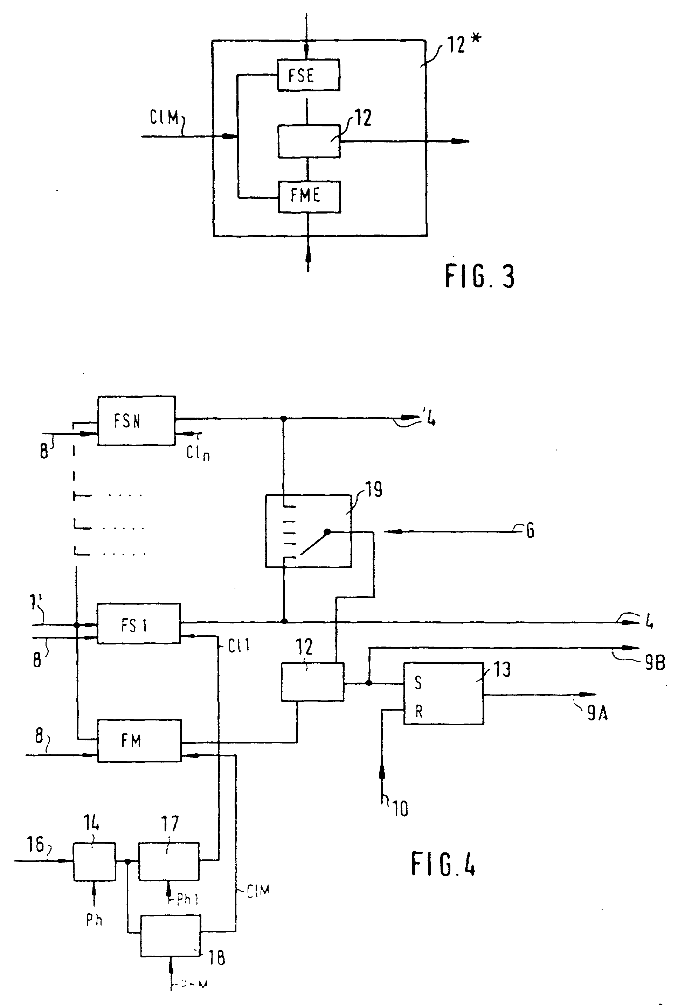

Figur 3 zeigt eine Ersatzschaltung des EXOR-Gatters 12, wobei eine Erweiterung über zwei weitere Entscheider FSE und FME erfolgt. Die in Figur 2 beschriebene Schaltung kann zu Problemen führen, da die beiden zu vergleichenden Abtastwerte der beiden Entscheider FS1 und FM nicht zum selben Zeitpunkt abgetastet werden. Durch das Einfügen von einem zweiten Entscheider FSE und FME in den beiden Signalzweigen, die jeweils mit der Phase CIM des Entscheiders FM angesteuert werden, ist es möglich durch Nachabtastung zum selben Zeitpunkt eine Fehlerquelle auszuschließen. Die Schaltung 12* tritt beispielsweise in den Ausführungsformen der Fig.2 und der Fig. 4 anstelle des EXOR-Gatters 12.

Figur 4 zeigt die Entscheider/Pseudofehler-Monitor-Schaltung mit einer Erweiterung für Mehrstufensignale. Aus der Offenlegungsschrift DE 43 41 408 ist beispielsweise ein optisches System zur Übertragung von Mehrstufensignalen bekannt. Dabei werden hohe Datenraten durch Addition mehrerer elektrischer Digitalsignale erreicht, wobei die Bitfolgen als Mehrstufensignale optisch übertragen werden. Im optischen Empfänger befindet sich dann eine Entscheiderschaltung, die die Digitalsignale wieder zurückgewinnt. Figur 4 zeigt eine solche Entscheider-Pseudofehler-Monitor-Schaltung. Das eingehende Datensignal 1 wird auf parallel geschaltete Entscheider FM bis FSN aufgeteilt. Die Entscheider FM bis FSN werden jeweils mit optimalen Schwellwerten 8 und optimalen Abtastphasen CIM bis Cln eingestellt. Die Ermittlung der Bitfehlerrate über den Entscheider FS1 erfolgt nur jeweils mit einem fest eingestellten Entscheider FM bis FSN. Welcher Entscheider mit den Werten des Entscheiders FS1 in der EXOR-Schaltung 12 verglichen wird, wird über einen Schalter 19 eingestellt. Der Schalter 19 verbindet jeweils den Ausgang eines der parallel geschalteten Entscheider mit einem Eingang der EXOR-Schaltung 12. Der Schalter 19 wird über die Leveleinstellung 6 der Recheneinheit angesteuert. Wird beispielsweise ein Vierniveausignal empfangen, sind drei Entscheider FM bis FSN notwendig. Jeder der drei Entscheider wird sowohl von seinem Schwellenwert als auch von der Phasenlage optimal eingestellt. Die Fehlerermittlung tastet je nach Auswahl durch den Rechner nur ein Auge für den jeweiligen Entscheider ab. Es wird nicht gleichzeitig die Bitfehlerrate für alle Augen des Mehrstufensignals ermittelt. Auch bei der Schaltung nach Figur 4 tritt die Problematik auf, daß durch Abtastung zu unterschiedlichen Phasenlagen vermeidbare Fehler auftreten. Daher ist auch hier der Einsatz der Schaltung 12* mit der zusätzlichen Vorabtastung des Signals eine vorteilhafte Erweiterung.

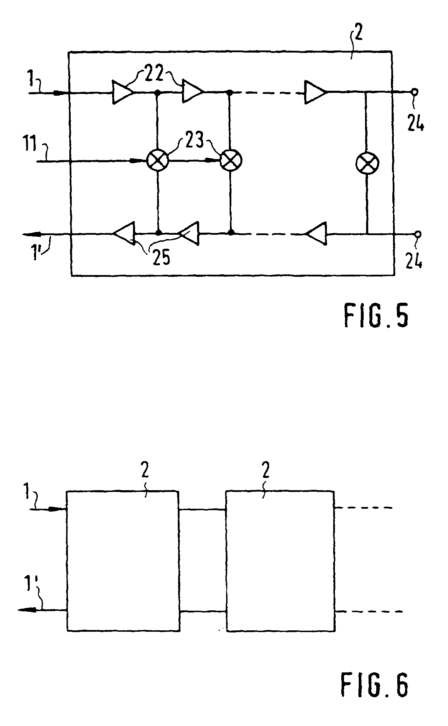

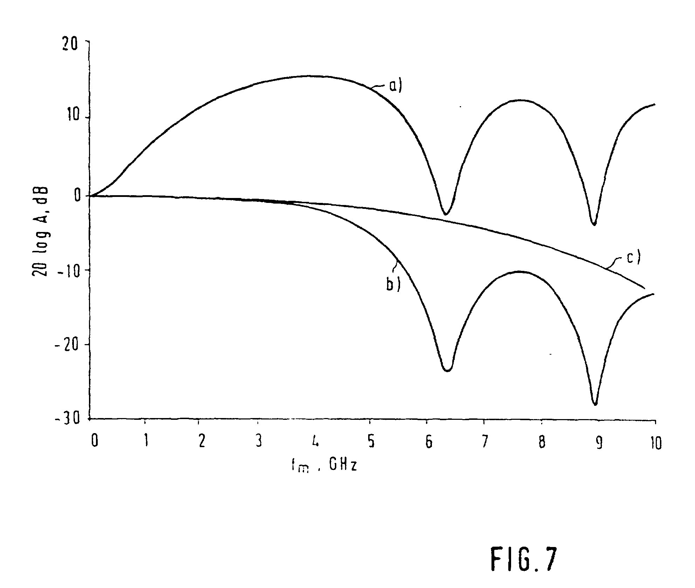

Eine beispielhafte Ausführungsform des Filters 2 ist in Figur 5 dargestellt. Das Eingangssignal 1 wird über eine Kette von Eingangsverstärkern 22 geleitet. Jeweils nach einem Eingangsverstärker 22 wird das Signal auf Multiplizierer 23 abgezweigt, die jeweils ausgangsseitig mit der Ausgangsverstärkerkette 25 verbunden sind. Die Multiplizierer 23 werden von den Filtereinstellungssignalen 11 angesteuert. Die Multiplizierer 23 weisen jeweils eigene Multiplikationsfaktoren auf. Das Eingangssignal 1 unterliegt in jeder Verstärkerzelle 22 und 25 einer Verzögerungszeit τ. Das Eingangssignal wird über die Verstärkerzellen, die beispielsweise einen Verstärkungsfaktor von 1 aufweisen, zeitlich verschoben und über die Gewichtung der Multiplizierer wieder zu einem gefilterten Signal 1' zusammengesetzt. Ein solcher symmetrischer Filteraufbau hat den Vorteil, daß keine Summation von allen Signalen an einem gemeinsamen Punkt erfolgen muß, was bei hohen Datenraten Probleme aufweist. Der vorgeschlagene symmetrische Filteraufbau arbeitet auch bei hohen Datenraten zuverlässig. Ein solches transversales Filter nach Figur 5 entspricht beispielsweise je nach Einstellung der Koeffizienten einem Tiefpaß. Aus Figur 6 läßt sich erkennen, daß das transversale Filter 2 auf einfache Weise mit weiteren identischen Filtern verkettet werden kann. Das Filter weist über die Ausgänge 24 Anschlüsse auf, die direkt zur Verkettung des nächsten Filterblocks dienen können. Über die Kaskadierung mehrerer Filterblöcke 2 ist die Realisierung von Filtern noch höherer Ordnung möglich. Eine beispielhafte Anwendung eines optischen Empfängers mit einem transversalen Filter, sowie einem Pseudofehler-Monitor ist in Figur 7 gezeigt. Dabei handelt es sich um die Übertragungsfunktion a eines DST-Signals. Die Übertragung eines DST-Signals wird in der EP 0554736 näher beschrieben. Die Übertragungsfunktion eines DST-Signals weist Hochpaßcharakteristik auf. Zur optimalen Detektion des Signals ist eine Tiefpaßfilterung des Signals a wünschenswert. Eine einfache Tiefpaßfilterung wie auch in der EP 0 554 736 beschrieben, zeigt ein Ergebnis, das mit dem Graph b dargestellt ist. Ein transversales digitales Filter nach Figur 6, das nach Figur 7 kaskadiert in höherer Ordnung arbeitet, kann das Ergebnis wesentlich verbessern. Die Übertragungsfunktion c stellt idealisiert den Einsatz eines digitalen Filters dar.

Die Verwendung des erfindungsgemäßen optischen Empfängers für den Empfang von DST-Signalen hat somit vorteilhafte Auswirkungen auf Bitfehlerraten und Empfindlichkeit des optischen Empfängers. Dabei wirkt sowohl die Filtercharakteristik des digitalen Filters als auch die Entscheideranpassung durch Ermittlung der Bitfehlerrate optimierend auf das gesamte Empfangssystem. Der erfindungsgemäße optische Empfänger dient auch zur Detektion von Signalen, die beispielsweise aufgrund von Polarisationsmodendispersion gestört empfangen werden. Sein Einsatz ist somit nicht auf DST-Signale oder Mehrstufensignale begrenzt.

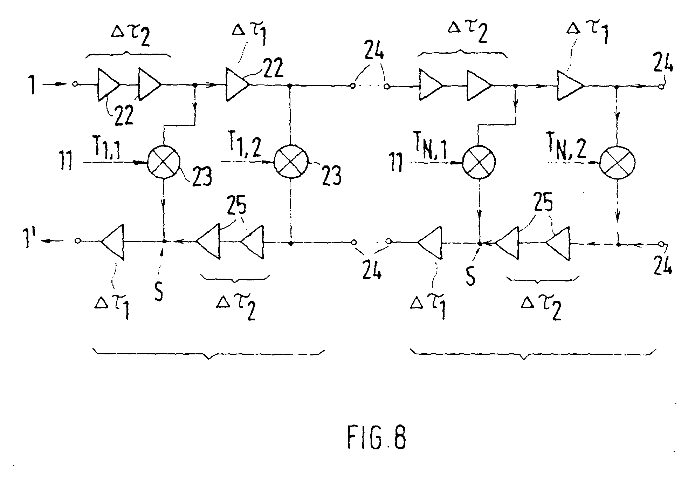

Eine beispielhafte Ausführungsform des Filters ist in Figur 8 dargestellt. Das Eingangssignal 1 wird über eine Kette von Eingangsverstärkern 22 geleitet.

Jeweils nach einem Eingangsverstärker 22 wird das Signal auf einen Multiplizierer 23 abgezweigt, dere jeweils ausgangsseitig mit der Ausgangsverstärkerkette 25 verbunden sind. Die Multiplizierer 23 werden von den Filtereinstellungssignalen 11 angesteuert. Die Multiplizierer 23 weisen jeweils eigene Gewichtungsfaktoren auf. Das Eingangssignal 1 unterliegt in jeder Verstärkerzelle 22 und 25 einer Verzögerungszeit Δτ₁ bzw. Δτ₂. Das Eingangssignal wird über die Verstärkerzellen, die beispielsweise einen Verstärkungsfaktor von 1 aufweisen, zeitlich verschoben und über die Gewichtung der Multiplizierer wieder zu einem gefilterten Signal zusammengesetzt. Ein solcher symmetrischer Filteraufbau hat den Vorteil, daß keine Summation von allen Signalen an einem gemeinsamen Punkt erfolgen muß, was bei hohen Datenraten Probleme aufweist. Der vorgeschlagene symmetrische Filteraufbau arbeitet auch bei hohen Datenraten zuverlässig. Ein solches transversales Filter nach Figur 8 entspricht beispielsweise je nach Einstellung der Koeffizienten einem Tiefpaß. Aus Figur 8 läßt sich erkennen, daß das transversale Filter auf einfache Weise mit weiteren identischen Filtern verkettet werden kann. Das Filter weist über die Ausgänge 24 Anschlüsse auf, die direkt zur Verkettung des nächsten Filterblocks dienen können. Über die Kaskadierung mehrerer Filterblöcke ist die Realisierung von Filtern noch höherer Ordnung möglich.

## Patentansprüche

1. Optischer Empfänger für den Empfang von digital übertragenen Daten (1), die insbesondere aufgrund von linearen und/oder nichtlinearen Effekten der Übertragungsstrecke verzerrt sind, wobei der Empfänger ein Filter (2) und eine mit ihm verbundene Entscheiderschaltung (3) zur Detektion der eingehenden Datensignale (1), sowie eine Taktableitung (15) enthält, wobei die Entscheiderschaltung (3) mit einer Recheneinheit (5) verbunden ist, **dadurch gekennzeichnet, dass**
die Entscheiderschaltung (3) eine Pseudofehler-Monitor-Schaltung zur schwellwert- und phasenabhängigen Detektion von Bitfehlern enthält und dass Parameter des Filters (2) und der Entscheider-/Pseudofehler-Monitor-Schaltung (3) von der mit ihnen verbundenen Recheneinheit (5) einstellbar sind.

2. Optischer Empfänger nach Anspruch 1, **dadurch gekennzeichnet, dass** in der Entscheider-/Pseudofehler-Monitor-Schaltung (3) mindestens zwei Schwellwertentscheider (FM, FS1) mit einer EXOR-Schaltung (12) verbunden sind, die bei unterschiedlichen Eingangswerten ein integrierbares erstes Fehlersignal (9B) und ein zweites Fehlersignal (9A) über Zwischenspeicherung in einem mit der EXOR-Schaltung (12) verbundenen RS-Flip-Flop (13) abgibt.

3. Optischer Empfänger nach Anspruch 2, **dadurch gekennzeichnet, daß** das RS-Flip-Flop (13) einen Bitfehler zwischenspeichert und die Recheneinheit (5) das RS-Flip-Flop (13) nach Auslesen des zweiten Bitfehlersignals (9A) mit einen Einzelfehler-Reset (10) wieder in den Ausgangszustand versetzt.

4. Optischer Empfänger noch einem der vorhergehenden Ansprüche, **dadurch gekennzeichnet, daß** die Recheneinheit (5) Phasenlagen der Takteingangssignale (CIM, CI1) der Entscheiderschaltungen (FM, FS1) über einen Phasenschieber (14) und Phaseneinstellungsglieder (17, 18), die mit den Entscheidern verbunden sind, mit Hilfe von Taktsignal (16) und Phaseneinstellung (PhM, Ph, Ph1) einstellt und für die Entscheider (FM, FS....) über die Schwellenwerteinstellungen (8) festlegt.

5. Optischer Empfänger nach einem der vorhergehenden Ansprüche, **dadurch gekennzeichnet, daß** ein EXOR-Gatter mit Vorabtastung (12*) benutzt wird, wobei jeweils vor dem EXOR-Gatter(12) ein weiterer Entscheider (FSE, FME) vorhanden ist, der jeweils mit dem Takt (CIM) des Signals des Phaseneinstellungsglieds (18) angesteuert wird.

6. Optischer Empfänger nach einem der vorhergehenden Ansprüche, **dadurch gekennzeichnet, daß** mehrere Entscheider (FS1..FSN) parallel zueinander mit einem Schalter (19) verbunden sind, der mit der EXOR-Schaltung (12) verbunden ist, und daß ein Signal Level-Einstellung (6) der Recheneinheit (5) die Umschaltung des Schalters (19) bewirkt

7. Optischer Empfänger nach einem der vorhergehenden Ansprüche, **dadurch gekennzeichnet, daß** mehrere Entscheider (FS1..FSN) parallel zueinander mit einem Schalter (19) verbunden sind, der mit der EXOR-Schaltung mit Vorabtastung (12*) verbunden ist, und daß ein Signal Level-Einstellung (6) der Recheneinheit (5) die Umschaltung des Schalters (19) bewirkt

8. Optischer Empfänger nach einem der vorhergehenden Ansprüche, **dadurch gekennzeichnet, daß** das Filter aus Verstärkern (22) mit fester oder variabler Verzögerungszeit aufgebaut ist, wobei Eingangs- Verstärker (22) über einstellbare Multiplizierglieder (23) mit den Ausgangsverstärkern (25) verbunden sind.

9. Optischer Empfänger nach einem der vorhergehenden Ansprüche, **dadurch gekennzeichnet, daß** die Multiplierzierglieder (23) von Signalen zur Filter-Einstellung (11) der Recheneinheit (5) anpaßbar sind.

10. Optischer Empfänger nach einem der vorhergehenden Ansprüche, **dadurch gekennzeichnet, daß** über die Ausgänge (24) mindestens ein weiteres Filter (2) anschließbar ist.

11. Optischer Empfänger für den Empfang von digital übertragenen Daten nach einem der vorhergehenden Ansprüchen mit einem eingangsseitigen Filter (1), **dadurch gekennzeichnet, daß** das Filter (1) aus Verstärkern (22,25) und Multipliziergliedern (23) aufgebaut ist, wobei die Eingangsverstärker (22) jeweils über Multiplizierglieder (23) mit den Ausgangsverstärkern (25) und weiteren Eingangsverstärker verbunden sind und wobei die Ausgangsverstärker (25) mit weiteren Ausgangsverstärkern (25) in Verbindung stehen.

12. Optischer Empfänger nach einem der vorhergehenden Ansprüchen, **dadurch gekennzeichnet, daß** die Verstärker (22, 25) eine Verstärkung um den Wert 1 aufweisen.

13. Optischer Empfänger nach einem der vorhergehenden Ansprüche, **dadurch gekennzeichnet, daß** die Multiplierzierglieder (23) die Signale der jeweilig mit ihnen verbundenen Eingangsverstärker (22) mit einem Gewichtungsfaktor zwischen -1 und + 1 multiplizieren.

14. Optischer Empfänger nach einem der vorhergehenden Ansprüche, **dadurch gekennzeichnet, daß** die Gewichtungsfaktoren aufgrund von Auswertung des Signals im Empfänger einstellbar sind.

15. Optischer Empfänger nach einem der vorhergehenden Ansprüche, **dadurch gekennzeichnet, daß** die Anzahl der Verstärker (22, 25) variabel ist.

16. Optischer Empfänger noch einem der vorhergehenden Ansprüche, **dadurch gekennzeichnet, daß** die Anzahl der Verstärker (22, 25) in Hin- und Rückrichtung unterschiedlich ist.

17. Optischer Empfänger nach einem der vorhergehenden Ansprüche, **dadurch gekennzeichnet, daß** an den Ausgängen (24) mindestens ein weiteres Filter anschließbar ist.

18. Optischer Empfänger nach einem der vorhergehenden Ansprüche, **dadurch gekennzeichnet, daß** die Verstärker (22,25) alternierend unterschiedliche Verzögerungszeiten Δτ₁ und Δτ₂ aufweisen.

19. Verwendung eines optischen Empfängers nach einem der vorhergehenden Ansprüche, **dadurch gekennzeichnet, daß** Daten (1) in einem DST (Dispersion Supported Transmisson) Modus einfacher und/oder höherer Ordnung empfangen werden.

20. Verwendung eines optischen Empfängers noch Anspruch 19, **dadurch gekennzeichnet, daß** Multilevelsignale oder empfangen werden.

## Claims

1. An optical receiver for receiving digitally transmitted data (1) which are distorted, in particular by reason of linear and/or non-linear effects of the transmission link, the receiver containing a filter (2) and a decision circuit (3) connected thereto for detecting the incoming data signals (1), as well as a timing extraction (15), the decision circuit (3) being connected to an arithmetic unit (5), **characterised in that**
the decision circuit (3) contains a pseudo-error monitor circuit for the threshold-value-dependent and phase-dependent detection of bit errors and **in that** parameters of the filter (2) and of the decision/pseudo-error-monitor circuit (3) are capable of being set by the arithmetic unit (5) connected to them.

2. Optical receiver according to Claim 1, **characterised in that** in the decision/pseudo-error-monitor circuit (3) at least two threshold-value decision circuits (FM, FS1) are connected to an EXOR circuit (12) which in the case of differing input values emits an integratable first error signal (9B) and a second error signal (9A) via temporary storage in an RS flip-flop (13) connected to the EXOR circuit (12).

3. Optical receiver according to Claim 2, **characterised in that** the RS flip-flop (13) temporarily stores a bit error and the arithmetic unit (5) resets the RS flip-flop (13) into the initial state with an individual-error reset (10) after read-out of the second bit error signal (9A).

4. Optical receiver according to one of the preceding claims, **characterised in that** the arithmetic unit (5) sets phase positions of the timing input signals (CIM, CI1) of the decision circuits (FM, FS1) via a phase shifter (14) and phase-adjustment elements (17, 18), which are connected to the decision circuits, with the aid of a timing signal (16) and a phase setting (PhM, Ph, Ph1) and establishes them for the decision circuits (FM, FS...) via the threshold-value settings (8).

5. Optical receiver according to one of the preceding claims, **characterised in that** an EXOR gate with presampling (12*) is utilised, whereby in each instance upstream of the EXOR gate (12) a further decision circuit (FSE, FME) is present which is driven in each instance with the clock pulse (CIM) of the signal of the phase-adjustment element (18).

6. Optical receiver according to one of the preceding claims, **characterised in that** several decision circuits (FS1 ... FSN) are connected, parallel to one another, to a switch (19) which is connected to the EXOR circuit (12), and **in that** a signal-level setting (6) of the arithmetic unit (5) brings about the switch-over of the switch (19).

7. Optical receiver according to one of the preceding claims, **characterised in that** several decision circuits (FS1 ... FSN) are connected, parallel to one another, to a switch (19) which is connected to the EXOR circuit with presampling (12*), and **in that** a signal-level setting (6) of the arithmetic unit (5) brings about the switch-over of the switch (19).

8. Optical receiver according to one of the preceding claims, **characterised in that** the filter is constructed from amplifiers (22) with a fixed or variable delay-time, input amplifiers (22) being connected to the output amplifiers (25) via adjustable multiplier elements (23).

9. Optical receiver according to one of the preceding claims, **characterised in that** the multiplier elements (23) are capable of being adapted by filter-setting signals (11) of the arithmetic unit (5).

10. Optical receiver according to one of the preceding claims, **characterised in that** at least one further filter (2) is capable of being linked via the outputs (24).

11. Optical receiver for receiving digitally transmitted data according to one of the preceding claims, with an input-side filter (1), **characterised in that** the filter (1) is constructed from amplifiers (22, 25) and multiplier elements (23), the input amplifiers (22) each being connected to the output amplifiers (25) and to further input amplifiers via multiplier elements (23), and the output amplifiers (25) being connected to further output amplifiers (25).

12. Optical receiver according to one of the preceding claims, **characterised in that** the amplifiers (22, 25) produce an amplification by a value of 1.

13. Optical receiver according to one of the preceding claims, **characterised in that** the multiplier elements (23) multiply the signals of the input amplifiers (22) connected to them in the given case by a weighting factor between -1 and +1.

14. Optical receiver according to one of the preceding claims, **characterised in that** the weighting factors are capable of being set on the basis of evaluation of signals in the receiver.

15. Optical receiver according to one of the preceding claims, **characterised in that** the number of amplifiers (22, 25) is variable.

16. Optical receiver according to one of the preceding claims, **characterised in that** the numbers of amplifiers (22, 25) in the outward and return directions are different.

17. Optical receiver according to one of the preceding claims, **characterised in that** at least one further filter is capable of being linked at the outputs (24).

18. Optical receiver according to one of the preceding claims, **characterised in that** the amplifiers (22, 25) have, in alternating manner, different delay-times Δτ₁ and Δτ₂.

19. Use of an optical receiver according to one of the preceding claims, **characterised in that** data (1) in a DST (Dispersion Supported Transmission) mode are received more easily and/or of a higher order.

20. Use of an optical receiver according to Claim 19, **characterised in that** multi-level signals or are received.

## Revendications

1. Récepteur optique pour la réception de données (1) transmises de façon numérique, qui sont distordues en particulier en raison d'effets linéaires et/ou non linéaires du tronçon de transmission, le récepteur contenant un filtre (2) et un circuit décideur (3) relié au filtre pour la détection des signaux de données (1) entrant, et une récupération de synchronisation (15), le circuit décideur (3) étant relié à une unité de calcul (5), **caractérisé en ce que** le circuit décideur (3) contient un circuit de moniteur pour pseudo-erreurs pour la détection, dépendante de la valeur seuil et des phases, d'erreurs binaires et **en ce que** des paramètres du filtre (2) et du circuit décideur/moniteur pour pseudo-erreurs (3) sont réglables par l'unité de calcul (5) reliée à eux.

2. Récepteur optique selon la revendication 1, **caractérisé en ce que** au moins deux décideurs de valeur seuil (FM, FS1) sont reliés à un circuit EXOR (12) dans le circuit décideur/moniteur pour pseudo-erreurs (3), lequel circuit émet un premier signal d'erreur (9B) intégrable et un second signal d'erreur (9A) dans le cas de différentes valeurs d'entrée au moyen d'un stockage intermédiaire dans un flip-flop RS (13) relié au circuit EXOR (12).

3. Récepteur optique selon la revendication 2, **caractérisé en ce que** le flip-flop RS (13) mémorise provisoirement une erreur binaire et l'unité de calcul (5) met le flip-flop RS (13) à nouveau dans l'état de départ après la lecture du second signal d'erreur binaire (9A) avec une remise à zéro d'erreur individuelle (10).

4. Récepteur optique selon l'une quelconque des revendications précédentes, **caractérisé en ce que** l'unité de calcul (5) règle des positions de phase des signaux d'entrée de synchronisation (CIM, Cl1) des circuits décideurs (FM, FS1) au moyen d'un déphaseur (14) et d'éléments de réglage de phase (17, 18), qui sont reliés aux décideurs, à l'aide de signal de synchronisation (16) et de réglage de phase (PhM, Ph, Ph1) et les définit pour les décideurs (FM, FS...) au moyen des réglages de valeur seuil (8).

5. Récepteur optique selon l'une quelconque des revendications précédentes, **caractérisé en ce qu'**on utilise une porte EXOR avec pré-balayage (12*), un autre décideur (FSE, FME) étant présent respectivement avant la porte EXOR (12), lequel décideur est commandé respectivement avec le cycle (CIM) du signal de l'organe de réglage de phase (18).

6. Récepteur optique selon l'une quelconque des revendications précédentes, **caractérisé en ce que** plusieurs décideurs (FS1... FSN) sont reliés parallèlement entre eux à un interrupteur (19), qui est relié au circuit EXOR (12), et **en ce qu'**un réglage de niveau de signal (6) de l'unité de calcul (5) entraîne la commutation de l'interrupteur (19).

7. Récepteur optique selon l'une quelconque des revendications précédentes, **caractérisé en ce que** plusieurs décideurs (FS1... FSN) sont reliés parallèlement entre eux à un interrupteur (19), qui est relié au circuit EXOR avec pré-balayage (12*) et **en ce qu'**un réglage de niveau de signal (6) de l'unité de calcul (5) entraîne la commutation de l'interrupteur (19).

8. Récepteur optique selon l'une quelconque des revendications précédentes, **caractérisé en ce que** le filtre est conçu à base d'amplificateurs (22) avec une temporisation fixe ou variable, des amplificateurs d'entrée (22) étant reliés au moyen d'éléments multiplicateurs (23) réglables aux amplificateurs de sortie (25).

9. Récepteur optique selon l'une quelconque des revendications précédentes, **caractérisé en ce que** les éléments multiplicateurs (23) de signaux peuvent être adaptés pour le réglage du filtre (11) de l'unité de calcul (5).

10. Récepteur optique selon l'une quelconque des revendications précédentes, **caractérisé en ce que** au moins un autre filtre (2) peut être raccordé par les sorties (24).

11. Récepteur optique pour la réception de données transmises de façon numérique selon l'une quelconque des revendications précédentes avec un filtre (1) côté entrée, **caractérisé en ce que** le filtre (1) est conçu à base d'amplificateurs (22, 25) et d'éléments multiplicateurs (23), les amplificateurs d'entrée (22) étant reliés respectivement au moyen d'éléments multiplicateurs (23) aux amplificateurs de sortie (25) et d'autres amplificateurs d'entrée et les amplificateurs de sortie (25) étant en liaison avec d'autres amplificateurs de sortie (25).

12. Récepteur optique selon l'une quelconque des revendications précédentes, **caractérisé en ce que** les amplificateurs (22, 25) présentent une amplification de la valeur 1.

13. Récepteur optique selon l'une quelconque des revendications précédentes, **caractérisé en ce que** les éléments multiplicateurs (23) multiplient les signaux des amplificateurs d'entrée (22) reliés respectivement à ces éléments par un facteur de pondération compris entre -1 et +1.

14. Récepteur optique selon l'une quelconque des revendications précédentes, **caractérisé en ce que** les facteurs de pondération peuvent être réglés sur la base de l'analyse du signal dans le récepteur.

15. Récepteur optique selon l'une quelconque des revendications précédentes, **caractérisé en ce que** le nombre des amplificateurs (22, 25) est variable.

16. Récepteur optique selon l'une quelconque des revendications précédentes, **caractérisé en ce que** le nombre des amplificateurs (22, 25) est différent dans le sens aller et le sens retour.

17. Récepteur optique selon l'une quelconque des revendications précédentes, **caractérisé en ce que** au moins un autre filtre peut être raccordé sur les sorties (24).

18. Récepteur optique selon l'une quelconque des revendications précédentes, **caractérisé en ce que** les amplificateurs (22, 25) présentent alternativement différentes temporisations Δτ₁ et Δτ₂.

19. Utilisation d'un récepteur optique selon l'une quelconque des revendications précédentes, **caractérisé en ce que** des données (1) sont reçues dans un mode DST (Dispersion Supported Transmission) d'ordre plus simple et/ou plus élevé.

20. Utilisation d'un récepteur optique selon la revendication 19, **caractérisé en ce que** des signaux à plusieurs niveaux sont reçus.
